# EUROPÄISCHE PATENTSCHRIFT

(11) **EP 3 944 002 B1**
(45) Veröffentlichungstag und Bekanntmachung des Hinweises auf die Patenterteilung: **03.09.2025**
(21) Anmeldenummer: 20187801.4
(22) Anmeldetag: 24.07.2020
(51) Int. Cl.: G02C 1/00, G02C 11/00

(54) **BRILLE UND VERFAHREN ZUR ERZEUGUNG EINER ANTIBAKTERIELLEN WIRKUNG BEI EINEM BRILLENGLAS**
SPECTACLE AND METHOD FOR PRODUCING AN ANTIBACTERIAL EFFECT IN A SPECTACLE LENS
LUNETTES ET PROCÉDÉ DE GÉNÉRATION D'UN EFFET ANTIBACTÉRIEN DANS UN VERRE DE LUNETTES

(43) Veröffentlichungstag der Anmeldung: 26.01.2022
(73) Patentinhaber: Carl Zeiss Vision International GmbH, 73430 Aalen (DE)
(72) Erfinder: Christmann, Michel-Rene, 73433 Aalen (DE)
(74) Vertreter: Carl Zeiss AG - Patentabteilung

(56) Entgegenhaltungen:
- WO-A1-2019/140036
- WO-A1-2019/179791
- WO-A2-2012/068527
- WO-A2-2013/188805
- US-A1- 2012 127 423

## Beschreibung

Die Erfindung betrifft eine Brille zur Erzeugung einer antibakteriellen Wirkung, umfassend ein formgerandetes Brillenglas mit einem Brillenglasrand zur Erzeugung einer antibakteriellen Wirkung nach dem Oberbegriff des Patentanspruchs 1 sowie ein Verfahren zur Erzeugung einer antibakteriellen Wirkung bei einem Brillenglas mit einem Brillenglasrand in einer Brillenfasung und einem Elektrolysemedium nach Patentanspruch 8.

Brillen und Brillengläser sind nach dem Stand der Technik in einer Vielzahl an Varianten bekannt. Am Rand eines Brillenglases, welches von einer randlosen Brillenfassung gehalten wird, und in den Zwischenräumen zwischen Brillenglas und Brillenfassung, zwischen Nasenpad und Brillenglas einer Brille und zwischen dem Scharnier der Brillenfassung und dem Brillenbügel sammeln sich vermehrt Haut-, Fett-, und Kosmetikreste.

Die Verunreinigungen in Form von Haut-, Fett-, und Kosmetikresten sowie körpereigenen Medien (zum Beispiel Schweiß) lassen sich durch gängige Reinigungs- und Desinfektionsmethoden bei einigen Brillen nur unzureichend entfernen und stellen somit einen idealen Nährboden für Krankheitserreger wie zum Beispiel Viren, Bakterien und Mikroben dar.

Die Dokumente WO 2012/068527 A2 und US 2012/127426 A1 beschreiben eine Brillenfassung mit einer elektrisch leitenden Verbindung.

Die WO 2019/179791 A1 offenbart ein Brillenglas umfassend eine Funktionsschicht auf dem äußeren Rand des Brillenglases. Die Funktionsschicht wird dabei in Form eines flüssigen Werkstoffs auf das Brillenglas aufgetragenen. Nach Aushärtung des Werkstoffes kann die Funktionsschicht eine elektrische bzw. elektronische Funktion aufweisen.

Die WO 2019/140036 A1 beschäftigt sich mit einem Verfahren zur Herstellung einer elektronischen Optik. Das Verfahren lehrt das Aufbringen eines ersten Harzes und eines zweiten Harzes.

Aus der US 9,663,401 B2 sind Brillengläser bekannt, deren Vorder- und/oder Rückseite mit einer Beschichtung versehen ist, die eine antibakterielle Wirkung aufweist. Obwohl sich diese Brillengläser dem Grunde nach bewährt haben, kann es im Bereich der Zwischenräume und im Falle fassungsrandloser Brillen im Bereich der Brillenglasränder weiterhin zu Verunreinigungen kommen.

Der Begriff "Zwischenraum" umfasst im Rahmen dieser Offenbarung alle Bereiche einer Brille, welche mit üblichen Reinigungsmitteln nur schwer oder gar nicht gereinigt oder desinfiziert werden können. Zu diesen Bereichen zählen insbesondere der Bereich zwischen dem Brillenglas und der Brillenfassung, der Bereich zwischen den Nasenpads und der Brillenfassung und der Bereich zwischen dem Scharnier und dem Brillenbügel.

Die WO 2013/188805 A2 offenbart eine Vorrichtung und ein Verfahren zur Herstellung von elektronischen Brillen, insbesondere zur Herstellung von elektroaktiven Gläsern.

Ausgehend von der Offenbarung in der WO 2013/188805 A2, besteht die Aufgabe der vorliegenden Erfindung darin, eine Brille mit einem Brillenglas bereitzustellen, bei der sich Verunreinigungen und insbesondere Bakterien oder Viren im Bereich des Brillenglasrandes leichter entfernen lassen. Weiterhin soll ein Verfahren zur Erzielung einer antibakteriellen Wirkung im Bereich des Brillenglasrandes bereitgestellt werden.

Diese Aufgabe wird durch eine Brille mit den Merkmalen des Patentanspruchs 1 sowie ein Verfahren mit den Merkmalen des Patentanspruchs 8 gelöst. Vorteilhafte Ausführungen und Weiterbildungen der Erfindung sind Gegenstand der Unteransprüche.

Ziel der Erfindung ist es eine Brille mit einem formgerandetes Brillenglas bereitzustellen, welche es ermöglicht die Vermehrung von Krankheitserregern in Zwischenräumen einer Brille einzudämmen und die Krankheitserreger in diesem Bereich zu töten. Damit einhergehend soll das Infektionsrisiko durch Benutzung und Berührung des formgerandeten Brillenglases und der Brille reduziert werden.

Der DIN EN ISO 13666:2019 entnimmt man unter Absatz 3.8.9 dass ein formgerandetes Brillenglas ein Brillenglas mit zwei fertig bearbeiteten optischen Flächen, das durch Bearbeitung des Brillenglasrandes auf die endgültige Größe und Form gebracht wurde, darstellt.

Eine erste Variante der Erfindung besteht im Zusammenspiel mit den weiteren Merkmalen des Patentanspruchs 1 bei einer erfindungsgemäßen Brille mit einem formgerandeten Brillenglas darin, dass der Brillenglasrand eine elektrisch leitende Brillenglasrand-Elektrode zur Erzeugung einer antibakteriellen Wirkung aufweist. Unter einer elektrisch leitenden Brillenglas-Elektrode versteht man im Rahmen der Erfindung einen Elektrodenleiter, der mit einem anderen Elektrodenleiter und mit einem beide Elektrodenleiter verbindenden Elektrolysemedium in Wechselwirkung steht. Vorzugsweise handelt es sich bei dem Elektrolysemedium um abgegeben Körperschweiß des Brillenträgers oder um eine Kochsalzlösung.

Das erfinderische Brillenglas umfasst eine elektrisch leitende Brillenglasrand-Elektrode die wenigstens einen Flächenanteil der Oberfläche des Brillenglasrands aus der nachfolgend angegebenen Gruppe bedeckt:
a) der bedeckte Flächenteil liegt zwischen 25% und 50%,
b) der bedeckte Flächenteil liegt zwischen 50% und 75%,
c) der bedeckte Flächenteil liegt zwischen 75% und 100%.

Eine weitere Variante der Erfindung ist dadurch gekennzeichnet, dass das erfindungsgemäße formgerandete Brillenglas so gestaltet ist, dass der der Brillenglasrand eine Facette aufweist und dass die Facette die elektrisch leitende Brillenglasrand-Elektrode aufweist. In der DIN EN ISO 13666:2019 Absatz 3.8.10 ist festgehalten, dass eine Facette die Form des Brillenglasrandes definiert. In anderen Worten stellt die Facette den Umriss des äußersten Brillenglasrandes eines formgerandeten Brillenglases dar.

Eine erfindungsgemäße Facette kann beispielsweise als Flach- oder Spitzfacette ausgeführt werden. Der DIN EN ISO 13666:2019 Absatz 3.2.2 folgend, handelt es sich bei einem Brillenglas mit Spitzfacette um den äußersten Rand des Brillenglases, wobei die Flächen der Spitzfacette einen Winkel von 120° symmetrisch einschließen und die Randdicke des Brillenglases größer ist als die Breite der Fassungsnut. Dem selben Absatz der Norm entnehmend, handelt es sich bei einem Brillenglas mit Flachfacette um einen scheibenfömigen Umriss des äußersten Brillenglasrandes.

Eine andere Variante umfasst eine Facette die als Flachfacette oder als Spitzfacette ausgebildet ist und eine elektrisch leitende Brillenglasrand-Elektrode auf der Oberfläche des Brillenglasrands positioniert ist.

Bei der Oberfläche des Brillenglasrandes handelt es sich um eine von der objektseitigen und augenseitigen Brillenglasfläche eingeschlossenen und die objektseitige und augenseitige Brillenglasfläche umlaufende Fläche. Die objektseitige Brillenglasfläche ist nach Absatz 3.2.13 der DIN EN ISO 13666:2019 die Fläche des Brillenglases, die bestimmungsgemäß in der Brillenfassung vom Auge abgewandt liegt. Analog dazu ist die augenseitige Brillenglasfläche nach Absatz 3.2.14 der DIN EN ISO 13666:2019 die Fläche des Brillenglases, die bestimmungsgemäß in der Brillenfassung dem Auge zugewandt liegt.

Erfindungsgemäß weißt die elektrisch leitende Brillenglasrand-Elektrode eine geometrische Form auf, wobei die geometrische Form einem Zylinder oder einem Quader entspricht, wobei vorzugsweise der Zylinder als Zylinderausschnitt und der Quader als Quaderausschnitt ausgeführt sind.

Unter Zylinderausschnitt wird im Rahmen dieser Offenbarung eine beliebige geometrische Form verstanden, die aus geometrischen Formteilen eines Zylinders besteht. In anderen Worten umfasst der Zylinderausschnitt einen formgleichen Teil eines Zylinders. Ein Beispiel für einen Zylinderausschnitt ist ein Viertelzylinder oder ein Halbzylinder. Außerdem versteht man unter Zylinderausschnitt im Rahmen dieser Erfindung auch jede beliebige geometrische Form, die durch Überlagerung einer beliebigen anderen geometrischen Form und eines Zylinders entsteht.

Unter Quaderausschnitt wird im Rahmen dieser Offenbarung eine beliebige geometrische Form verstanden, die aus geometrischen Formteilen eines Quaders besteht. In anderen Worten umfasst der Quaderausschnitt einen formgleichen Teil eines Quaders. Ein Beispiel für einen Quaderausschnitt ist ein Würfel. Außerdem versteht man unter Quaderausschnitt im Rahmen dieser Erfindung auch jede beliebige geometrische Form, die durch Überlagerung einer anderen geometrischen Form und eines Quaders entsteht. Vorzugsweise ist der Quaderausschnitt in Form eines Bandes ausgeführt.

Mit Überlagerung ist im Rahmen dieser Erfindung die geometrische Formentnahme einer beliebigen Form von einer definierten Ursprungsform gemeint. Die definierte Ursprungsform umfasst einen Zylinder und einen Quader.

Eine weitere Variante ist dadurch gekennzeichnet, dass die elektrisch leitende Brillenglasrand-Elektrode ein Material aus der nachfolgend angegebenen Gruppe umfasst oder aus einem Material aus der nachfolgend angegebenen Gruppe besteht:
a) das Material ist Titan,
b) das Material ist Silber,
c) das Material ist Kohlenstoff,
d) das Material ist Kupfer,
e) das Material ist Eisen,
f) das Material ist Graphit.

Die Materialen a) - d) sind besonders geeignet, da diese durch einen Verdampfungsprozess vollflächig auf die Oberfläche des Brillenglasrandes aufgebracht werden können. Eisen eignet sich bei vielen Elektrolyseformen und stellt daher ein geeignetes Material dar. Durch die hohe elektrische Leitfähigkeit ist Graphit ein besonders geeignetes Material für die Brillenglasrand-Elektrode.

Erfindungsgemäß wird eine Brille offenbart. Die Brille umfasst ein formgerandetes Brillenglas und eine Brillenfassung die einen Brillenfassungsrand mit einer elektrisch leitenden Brillenfassungsrand-Elektrode aufweist. Die Brille ist so ausgestaltet, dass die elektrisch leitende Brillenglasrand-Elektrode und die elektrisch leitende Brillenfassungsrand-Elektrode geometrisch derart aufeinander abgestimmt sind, dass die elektrisch leitende Brillenglasrand-Elektrode und die elektrisch leitende Brillenfassungsrand-Elektrode an dem gleichen Zwischenraum direkt angrenzen. Der Ausdruck "direkt angrenzen" umfasst sowohl eine Positionierung der Elektroden an der Grenze zum Zwischenraum, beispielsweise in der Brillenfassung und/oder im Brillenglas, als auch eine Positionierung die in den Zwischenraum hineinragt, beispielsweise auf der Brillenfassung und/oder auf dem Brillenglas.

In einer weiteren Variante umfasst die Brille eine Quelle für elektrische Energie, die mit der elektrisch leitenden Brillenglasrand-Elektrode und der elektrisch leitenden Brillenfassungsrand-Elektrode derart verbunden ist, dass eine Elektrode positiv und die andere Elektrode negativ aufgeladen wird. Bei der Quelle für elektrische Energie kann es sich um eine herkömmliche (austauschbare) Batterie, einen Akkumulator oder eine andere Form der Quelle für elektrische Energie handeln. Die Quelle für elektrische Energie kann dabei fest oder herausnehmbar in der Brille verbaut sein.

In einem weiteren Aspekt betrifft die vorliegende Erfindung ein Verfahren bei dem eine elektrisch leitende Brillenglasrand-Elektrode (3) eines formgerandeten Brillenglases mit einem Brillenglasrand in einer Brillenfassung, die einen Brillenfassungsrand mit einer elektrisch leitenden Brillenfassungsrand-Elektrode aufweist, und einem Elektrolysemedium zwischen dem formgerandeten Brillenglas und der Brillenfassung, mit einer elektrischen Stromdichte beaufschlagt wird.

Das erfinderische Verfahren ist durch den Verfahrensschritt gekennzeichnet, dass zur Erzeugung einer antibakteriellen Wirkung das Beaufschlagen einer Brillenglasrand-Elektrode mit einer elektrischen Stromdichte, erfolgt. Die elektrische Stromdichte umfasst wenigstens einen Wert aus der nachfolgenden Gruppe a) die elektrische Stromdichte liegt zwischen 65A/m2 und 97,5A/m2, b) die elektrische Stromdichte liegt zwischen 97,5A/m2 und 130A/m2, c) die elektrische Stromdichte liegt zwischen 130A/m2 und 260A/m2. Die elektrischen Stromdichten sind dabei so gewählt, dass abhängig vom oben beschriebenen bedeckten Flächenanteil, eine maximale Stromstärke von 10mA erreicht werden soll.

Die Erfindung wird nachfolgend anhand der Zeichnungen näher beschrieben. Es zeigen:
- Figur 1: Darstellung des erfindungsgemäßen formgerandeten Brillenglases und der Brillenfassung
- Figur 2: Darstellung der erfindungsgemäßen Brille

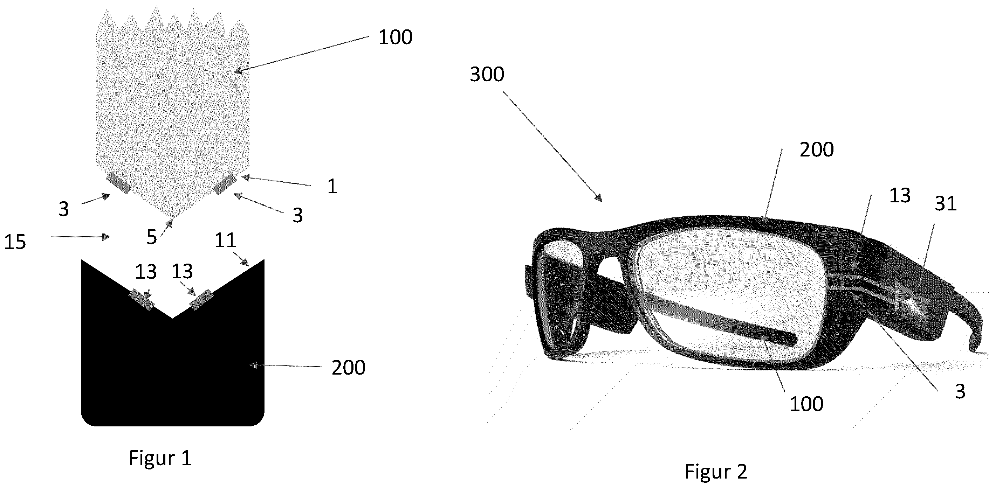

Figur 1 zeigt ein formgerandete Brillenglas (100) mit einem Brillenglasrand (1). Am Brillenglasrand ist eine Facette (5) ausgebildet. Außerdem ist eine Brillenfassung (200) mit einem Brillenfassungsrand (11) dargestellt.

Das formgerandete Brillenglas (100) und die Brillenfassung (200) sind derart zueinander angeordnet sind, dass ein Zwischenraum (15) zwischen dem formgerandeten Brillenglas (100) und der Brillenfassung (200) entsteht. An den Zwischenraum (15) grenzen eine Brillenglasrand-Elektrode (3) und eine Brillenfassungsrand-Elektrode (13).

Der Zwischenraum (15) ermöglicht es den vom Brillenträger ausgeschiedenen Körperflüssigkeiten und Krankheitserregern sich im Zwischenraum (15) abzulagern und zu vermehren.

Figur 2 zeigt ein Ausführungsbeispiel der Brille 300. Die Brille umfasst ein formgerandetes Brillenglas (100), eine Brillenfassung (200) sowie eine Quelle für elektrische Energie (31).

Eine Brillenglasrand-Elektrode (3) und eine Brillenfassungsrand-Elektrode (13) sind mit der Quelle für elektrische Energie (31) verbunden.

Das formgerandete Brillenglas (100) und die Brillenfassung (200) sind derart zueinander angeordnet sind, dass ein Zwischenraum (15) zwischen dem formgerandeten Brillenglas (100) und der Brillenfassung (200) entsteht. An den Zwischenraum (15) grenzen eine Brillenglasrand-Elektrode (3) und eine Brillenfassungsrand-Elektrode (13).

Der Zwischenraum (15) ermöglicht es den vom Brillenträger ausgeschiedenen Körperflüssigkeiten und Krankheitserregern sich im Zwischenraum (15) abzulagern und zu vermehren.

Figur 2 zeigt ein Ausführungsbeispiel der Brille 300. Die Brille umfasst ein formgerandetes Brillenglas (100), eine Brillenfassung (200) sowie eine Quelle für elektrische Energie (31).

Eine Brillenglasrand-Elektrode (3) und eine Brillenfassungsrand-Elektrode (13) sind mit der Quelle für elektrische Energie (31) verbunden.

## Patentansprüche

1. Brille (300) zur Erzeugung einer antibakteriellen Wirkung, umfassend
ein formgerandetes Brillenglas (100) mit einem Brillenglasrand (1), wobei der Brillenglasrand (1) eine elektrisch leitende Brillenglasrand-Elektrode (3) aufweist,
wobei der Brillenglasrand (1) eine Oberfläche aufweist und die elektrisch leitende Brillenglasrand-Elektrode (3) einen Flächenanteil der Oberfläche aus der nachfolgend angegebenen Gruppe bedeckt: a) der Flächenanteil liegt zwischen 25% und 50%, b) der Flächenanteil liegt zwischen 50% und 75%, c) der Flächenanteil liegt zwischen 75% und 100%
und eine Brillenfassung (200), die einen Brillenfassungsrand (11) mit einer elektrisch leitenden Brillenfassungsrand-Elektrode (13) aufweist,
**dadurch gekennzeichnet,**
**dass** die elektrisch leitende Brillenglasrand-Elektrode (3) und die elektrisch leitende Brillenfassungsrand-Elektrode (13) geometrisch derart aufeinander abgestimmt sind, dass die elektrisch leitende Brillenglasrand-Elektrode (3) und die elektrisch leitende Brillenfassungsrand-Elektrode (13) voneinander beabstandet an einem gleichen Zwischenraum (15) direkt angrenzen.

2. Brille (300) nach Anspruch 1, **dadurch gekennzeichnet, dass** der Brillenglasrand (1) eine Facette (5) aufweist und dass die Facette (5) die elektrisch leitende Brillenglasrand-Elektrode (3) aufweist.

3. Brille (300) nach Anspruch 2, **dadurch gekennzeichnet, dass** die Facette (5) als Flachfacette oder als Spitzfacette ausgebildet ist.

4. Brille (300) nach einem der vorangegangenen Ansprüche, **dadurch gekennzeichnet, dass** die elektrisch leitende Brillenglasrand-Elektrode (3) eine geometrische Form aufweist, wobei die geometrische Form einem Zylinder oder einem Quader entspricht, wobei vorzugsweise der Zylinder als Zylinderausschnitt und der Quader als Quaderausschnitt ausgeführt sind.

5. Brille (300) nach einem der vorangegangenen Ansprüche, **dadurch gekennzeichnet, dass** die elektrisch leitende Brillenglasrand-Elektrode (3) ein Material aus der nachfolgend angegebenen Gruppe umfasst oder aus einem Material aus der nachfolgend angegebenen Gruppe besteht: a) das Material ist Titan, b) das Material ist Silber, c) das Material ist Kohlenstoff, d) das Material ist Kupfer, e) das Material ist Eisen, f) das Material ist Graphit.

6. Brille (300) nach einem der Ansprüche 1 bis 5 umfassend eine Quelle (31) für elektrische Energie, die mit der elektrisch leitenden Brillenglasrand-Elektrode (3) und der elektrisch leitenden Brillenfassungsrand-Elektrode (13) derart verbunden ist, dass eine Elektrode positiv und die andere Elektroden negativ aufgeladen wird.

7. Brille (300) nach Anspruch 6, **dadurch gekennzeichnet, dass** die Quelle (31) eine Quelle aus der nachfolgend angegebenen Gruppe umfasst: a) Batterien, b) Akkumulatoren.

8. Verfahren, bei dem eine elektrisch leitende Brillenglasrand-Elektrode (3) eines formgerandeten Brillenglases (100) mit einem Brillenglasrand (1) in einer Brillenfassung (200), die einen Brillenfassungsrand (11) mit einer elektrisch leitenden Brillenfassungsrand-Elektrode (13) aufweist, und einem Elektrolysemedium in einem Zwischenraum zwischen dem formgerandeten Brillenglas (100) und der Brillenfassung (200), mit einer elektrischen Stromdichte beaufschlagt wird,
wobei zur Erzeugung einer antibakteriellen Wirkung das Beaufschlagen der Brillenglasrand-Elektrode (3) mit einer elektrischen Stromdichte erfolgt, die wenigstens einen Wert aus der nachfolgend angegebenen Gruppe umfasst: a) die elektrische Stromdichte liegt zwischen 65A/m² und 97,5A/m², b) die elektrische Stromdichte liegt zwischen 97,5A/m² und 130A/m², c) die elektrische Stromdichte liegt zwischen 130A/m² und 260A/m².

## Claims

1. A pair of spectacles (300) for producing an antibacterial effect, comprising a custom-fitted spectacle lens (100) having a spectacle lens edge (1), wherein the spectacle lens edge (1) has an electrically conductive spectacle lens edge electrode (3),
wherein the spectacle lens edge (1) has a surface and the electrically conductive spectacle lens edge electrode (3) covers an area proportion of the surface from the group specified hereinafter: a) the area proportion is between 25% and 50%, b) the area proportion is between 50% and 75%, c) the area proportion is between 75% and 100%,
and a spectacle frame (200), which has a spectacle frame edge (11) having an electrically conductive spectacle frame edge electrode (13),
**characterized in that**
the electrically conductive spectacle lens edge electrode (3) and the electrically conductive spectacle frame edge electrode (13) are geometrically matched with one another such that the electrically conductive spectacle lens edge electrode (3) and the electrically conductive spectacle frame edge electrode (13) directly adjoin an identical intermediate space (15) spaced apart from one another.

2. The pair of spectacles (300) as claimed in claim 1, **characterized in that** the spectacle lens edge (1) has a facet (5), and the facet (5) has the electrically conductive spectacle lens edge electrode (3).

3. The pair of spectacles (300) as claimed in claim 2, **characterized in that** the facet (5) is formed as a flat facet or as a pointed facet.

4. The pair of spectacles (300) as claimed in any one of the preceding claims, **characterized in that** the electrically conductive spectacle lens edge electrode (3) has a geometric shape, wherein the geometric shape corresponds to a cylinder or a cuboid, wherein preferably the cylinder is embodied as a cylinder cutout and the cuboid is embodied as a cuboid cutout.

5. The pair of spectacles (300) as claimed in any one of the preceding claims, **characterized in that** the electrically conductive spectacle lens edge electrode (3) comprises a material from the group specified hereinafter or consists of a material from the group specified hereinafter: a) the material is titanium, b) the material is silver, c) the material is carbon, d) the material is copper, e) the material is iron, f) the material is graphite.

6. The pair of spectacles (300) as claimed in any one of claims 1 to 5, comprising a source (31) for electrical energy, which is connected to the electrically conductive spectacle lens edge electrode (3) and the electrically conductive spectacle frame edge electrode (13) such that one electrode is positively charged and the other electrode is negatively charged.

7. The pair of spectacles (300) as claimed in claim 6, **characterized in that** the source (31) comprises a source from the group specified hereinafter: a) batteries, b) accumulators.

8. A method, in which an electrical current density is applied to an electrically conductive spectacle lens edge electrode (3) of a custom-fitted spectacle lens (100) having a spectacle lens edge (1) in a spectacle frame (200), which has a spectacle frame edge (11) having an electrically conductive spectacle frame edge electrode (13), and an electrolysis medium in an intermediate space between the custom-fitted spectacle lens (100) and the spectacle frame (200),
wherein to produce an antibacterial effect, an electrical current density is applied to the spectacle lens edge electrode (3), which comprises at least one value from the group specified hereinafter:
a) the electrical current density is between 65 A/m² and 97.5 A/m², b) the electrical current density is between 97.5 A/m² and 130 A/m², c) the electrical current density is between 130 A/m² and 260 A/m².

## Revendications

1. Lunettes (300) destinées à produire une action antibactérienne, comprenant
un verre (100) de lunettes à bords profilés avec un bord (1) de verre de lunettes, le bord (1) de verre de lunettes comportant une électrode électriquement conductrice (3) de bord de verre de lunettes,
le bord (1) de verre de lunettes comportant une surface et l'électrode électriquement conductrice (3) de bord de verre de lunettes recouvrant un pourcentage de surface de la surface issu du groupe indiqué ci-après : a) le pourcentage de surface se situe entre 25 % et 50 %, b) le pourcentage de surface se situe entre 50 % et 75 %, c) le pourcentage de surface se situe entre 75 % et 100 % et une monture (200) de lunettes, qui comporte un bord (11) de monture de lunettes avec une électrode électriquement conductrice (13) de bord de monture de lunettes,
**caractérisées en ce**
**que** l'électrode électriquement conductrice (3) de bord de verre de lunettes et l'électrode électriquement conductrice (13) de bord de monture de lunettes sont adaptées géométriquement l'une à l'autre de telle manière que l'électrode électriquement conductrice (3) de bord de verre de lunettes et l'électrode électriquement conductrice (13) de bord de monture de lunettes jouxtent directement de manière espacée l'une de l'autre un espace intermédiaire (15) identique.

2. Lunettes (300) selon la revendication 1, **caractérisées en ce que** le bord (1) de verre de lunettes comporte une facette (5), et que la facette (5) comporte l'électrode électriquement conductrice (3) de bord de verre de lunettes.

3. Lunettes (300) selon la revendication 2, **caractérisées en ce que** la facette (5) est réalisée comme une facette plate ou comme une facette pointue.

4. Lunettes (300) selon l'une des revendications précédentes, **caractérisées en ce que** l'électrode électriquement conductrice (3) de bord de verre de lunettes présente une forme géométrique, la forme géométrique correspondant à un cylindre ou à un parallélépipède, le cylindre étant conçu comme une découpe cylindrique et le parallélépipède étant conçu comme une découpe parallélépipédique.

5. Lunettes (300) selon l'une quelconque des revendications précédentes, **caractérisées en ce que** l'électrode électriquement conductrice (3) de bord de verre de lunettes comprend un matériau issu du groupe indiqué ci-après ou est constituée d'un matériau issu du groupe indiqué ci-après : a) le matériau est du titane, b) le matériau est de l'argent, c) le matériau est du carbone, d) le matériau est du cuivre, e) le matériau est du fer, f) le matériau est du graphite.

6. Lunettes (300) selon l'une des revendications 1 à 5, comprenant une source (31) d'énergie électrique, qui est reliée de telle manière à l'électrode électriquement conductrice (3) de bord de verre de lunettes et à l'électrode électriquement conductrice (13) de bord de monture de lunettes qu'une électrode est chargée positivement et les autres électrodes sont chargées négativement.

7. Lunettes (300) selon la revendication 6, **caractérisées en ce que** la source (31) comprend une source issue du groupe indiqué ci-après : a) des batteries, b) des accumulateurs.

8. Procédé, dans lequel une électrode électriquement conductrice (3) de bord de verre de lunettes d'un verre (100) de lunettes à bords profilés avec un bord (1) de verre de lunettes dans une monture (200) de lunettes, qui comporte un bord (11) de monture de lunettes avec une électrode électriquement conductrice (13) de bord de monture de lunettes, et un milieu d'électrolyse dans un espace intermédiaire entre le verre (100) de lunettes à bords profilés et la monture (200) de lunettes, est soumise à l'action d'une densité de courant électrique, l'exposition de l'électrode (3) de bord de verre de lunettes à l'action d'une densité de courant électrique étant effectuée pour produire une action antibactérienne, laquelle comprend au moins une valeur issue du groupe indiqué ci-après : a) la densité de courant électrique se situe entre 65A/m² et 97,5A/m², b) la densité de courant électrique se situe entre 97,5A/m² et 130A/m², c) la densité de courant électrique se situe entre 130A/m² et 260A/m².
